# EUROPÄISCHE PATENTSCHRIFT

(11) **EP 0 745 252 B1**
(45) Veröffentlichungstag und Bekanntmachung des Hinweises auf die Patenterteilung: **29.04.1998**
(21) Anmeldenummer: 95910399.5
(22) Anmeldetag: 15.02.1995
(51) Int. Cl.: G11B 17/22

(54) **WIEDERGABE- UND/ODER AUFZEICHNUNGSGERÄT FÜR PLATTEN**
PLAYBACK AND/OR RECORDING DEVICE FOR RECORDS
APPAREIL DE LECTURE ET/OU D'ENREGISTREMENT DE DISQUES

(30) Priorität: 19.02.1994 DE 4405361
(43) Veröffentlichungstag der Anmeldung: 04.12.1996
(73) Patentinhaber: NSM AKTIENGESELLSCHAFT, 55411 Bingen (DE)
(72) Erfinder: MENKE, Wilhelm, D-55411 Bingen (DE); SCHULZE, Ulrich, D-65191 Wiesbaden (DE); HEIDERSBERGER, Börge, D-55411 Bingen (DE); NIEDERLEIN, Horst, D-55411 Bingen (DE)
(74) Vertreter: Becker, Bernd, Dipl.-Ing.
(86) Internationale Anmeldenummer: DE9500197
(87) Internationale Veröffentlichungsnummer: WO9522823

(56) Entgegenhaltungen:
- WO-A-90/04845
- WO-A-93/11535
- WO-A-93/14499
- DE-A- 4 313 373
- US-A- 5 206 845

## Beschreibung

Die Erfindung bezieht sich auf ein Wiedergabe- und/oder Aufzeichnungsgerät für Platten, insbesondere CD-Platten, mit
- einem schrankartigen Gehäuse,
- einer Fachanordnung für Plattenmagazine, die in übereinanderliegenden Aufnahmefächern Plattenhalter für mindestens eine Platte aufnehmen, und Laufwerke zum Auslesen oder Einschreiben von Informationen von der bzw. auf die Platte und
- einer rechnergesteuerten Transporteinrichtung zur wahlweisen Beförderung der einzelnen Platte mit dem Plattenhalter zwischen beliebigen Aufnahmefächern und einem der Laufwerke.

Aus der DE-A- 3 922 721 und der WO-A-93/14499 sind Plattenabspielgeräte mit zwei seitlich in einem Gehäuse gegenüberliegend angeordneten Plattenmagazinen bekannt. Jedes Plattenmagazin besitzt eine Vielzahl übereinanderliegend angeordneter Aufnahme fächer für die Lagerung einer entsprechenden Anzahl an je eine Platte aufnehmender Plattenhalterungen. In dem Raum zwischen den Plattenmagazinen befindet sich eine auf- und abverfahrbare Transporteinrichtung zur Hin- und Herbeförderung einer gewünschten Platte mit dem zugehörigen Plattenhalter zwischen dem Aufnahmefach und einer Abspieleinheit, die feststehend zwischen und unterhalb der beiden gegenüberliegenden Plattenmagazinen angebracht ist. Um bei einem derartigen Plattenabspielgerät ein zeitlich unmittelbares Abspielen von Platten hintereinander, wie es z.B. in Diskotheken gefordert wird, zu ermöglichen, sind mehrere Abspieleinheiten mit jeweils zugehöriger Transporteinrichtung unter Zwischenschaltung eines beidseitig offenen, durch benachbarte Transporteinrichtungen zugänglichen Plattenmagazins in Reihe nebeneinander angeordnet, wobei an jedem Ende der Reihe ein weiteres Plattenmagazin vorgesehen ist. Dies ist insofern nachteilig, als jeder Abspieleinheit eine gesonderte Transporteinrichtung zugeordnet ist, was einen erhöhten Raumbedarf erfordert. Darüber hinaus sind hierbei die Platten nach dem Abspielen stets nur wieder in demselben Plattenmagazin ablegbar. Aus der WO-A-93/14499 ist darüber hinaus bekannt, am Gehäuse eine Tasten aufweisende Bedienungstafel anzubringen.

Um die vorgenannten Nachteile zu beseitigen, ist bereits aus der DE-A-4 140 234 ein Plattenabspielgerät mit zwei einander gegenüberstehenden Plattenmagazinen bekannt, bei dem mindestens zwei von einer Transporteinrichtung bedienbare und unabhängig voneinander steuerbare Abspieleinheiten vorgesehen sind, wobei mittels der Transporteinrichtung die einzelne Platte mit dem Plattenhalter wahlweise aus dem einen oder anderen Plattenmagazin zu der einen oder anderen Abspieleinheit transportierbar und nach dem Abspielen wieder wahlweise in dem einen oder anderen Plattenmagazin ablegbar ist. Weiterhin sind hierbei die einzelnen Platten mit dem jeweils zugehörigen Plattenhalter mit Hilfe der Transporteinrichtung unmittelbar zwischen den Plattenmagazinen austauschbar. Die Abspieleinheiten sind unterhalb und/oder oberhalb der Plattenmagazine angeordnet. Dies bedingt eine entsprechend große räumliche Erstreckung des Plattenabspielgerätes nach oben und/oder nach unten. Ferner ist die Speicherkapazität der Plattenmagazine im Rahmen der vorgegebenen Bauhöhe des Plattenabspielgerätes begrenzt.

Aus der DE-A-4 313 373 A1, die den nächstliegenden Stand der Technik wiedergibt, ist darüber hinaus eine Archiveinheit für optische, jeweils in einer Kassette aufgenommene Speicherplatten bekannt. Die Kassetten sind in übereinanderliegenden Fächern von nebeneinanderliegenden Feldern einer gehäusefesten Fachanordnung untergebracht. Mindestens ein Laufwerkpaar zum Abspielen bzw. Bespielen der Platten ist in einem der Felder der Fachanordnung angeordnet. An der Frontseite der Fachanordnung befindet sich eine Transporteinrichtung, um eine Kassette zwischen gewählten Orten hin- und herfahren zu können. Mittels eines Greifers wird die Kassette in die Transporteinrichtung hineingezogen.

Der Erfindung liegt die Aufgabe zugrunde, ein Wiedergabe- und/oder Aufzeichnungsgerät der eingangs genannten Art zu schaffen, das bei einem einfachen und kompakten Aufbau eine hohe Platten-Speicherkapazität ermöglicht, wobei die Platten bei kurzer Beförderungszeit in beliebiger Folge aus dem Plattenmagazinen entnommen und in diese beliebig zurückgelegt werden können.

Diese Aufgabe wird erfindungsgemäß gelöst durch
- eine der Fachanordnung gegenüberliegende weitere Fachanordnung in die jeweils die Plattenmagazine und/oder die Laufwerke auswechselbar eingesetzt sind,
- mindestens eine am Gehäuse angelenkte Tür, die auf ihrer Innenseite die zugeordnee Fachanordnung trägt,
- einen Plattenhalter-Transportschlitten, der auf zwischen den Fachanordnungen angeordneten Führungen zugleich in der horizontalen und vertikalen Richtung verfahrbar ist, und
- eine Zug-Schub-Einrichtung mit Greiferarmen am Plattenhalter-Transportschlitten zur wechselseitigen Beförderung eines Plattenhalters zwischen einem Aufnahmefach bzw. einem Laufwerk und dem Plattenhalter-Transportschlitten.

Durch diese Maßnahmen ergibt sich ein Wiedergabe- und/oder Aufzeichnungsgerät für Platten, das trotz einer sehr großen Anzahl zur Verfügung gestellter Platten-Speicherplätze eine verhältnismäßig kleine Baugröße aufweist. Da der Plattenhalter-Transportschlitten der Transporteinrichtung gleichzeitig horizontal und vertikal verfahrbar ist, ergibt sich eine sehr kurze Bearbeitungszeit für eine einzelne Platte bzw. einen einzelnen Plattenhalter. Der Plattenhalter-Transportschlitten ist mit einer Zug-Schub-Einrichtung ausgestattet, die einen transportierten Plattenhalter in ein Aufnahmefach eines Plattenmagazins versetzen kann bzw. einen gewünschten Plattenhalter entnehmen und im Plattenhalter-Transportschlitten unterbringen kann. Durch diese Konstruktion ist es ermöglicht, den Plattenhaltertransport mit nur einem Schlitten durchzuführen, und insbesondere ohne Verwendung von Querschienen, die einen großen Raumbedarf mit sich bringen. Hierdurch kann der Abstand der beiden einander gegenüberliegenden Fachanordnungen verringert werden. Das Wiedergabe- und/oder Aufzeichnungsgerät kann somit bei zugleich größerer Plattenspeicherkapazität kompakter ausgeführt werden. Die Anbringung einer der Fachanordnungen an einer Tür ermöglicht eine besonders einfache Beschickung der Fachanordnungen mit Plattenmagazinen bzw. Laufwerken. Auch Wartungsarbeiten sind wesentlich erleichtert. Für einen Zugriff zu den Fächern bzw. dem Transportmechanismus braucht lediglich die Tür geöffnet werden.

Zur Erleichterung der Auswechselbarkeit der Laufwerke sind nach einer vorteilhaften Ausgestaltung der Erfindung die Laufwerke jeweils als Einschubeinheit schubladenförmig übereinander in ein Fach einer der Fachanordnungen eingesetzt.

Damit das Ab- oder Bespielen oder Lagern einer einzelnen, nicht in einem Plattenmagazin vorhandenen Platte oder das Auswechseln einer in einem Plattenmagazin vorhandenen Platte auf einfache Weise durchgeführt werden kann, ist nach einer vorteilhaften Weiterbildung des Erfindungsgegenstandes in einem aus den übereinander angeordneten Laufwerken bestehenden Turm mindestens ein einen Plattenhalter mit einer Platte aufnehmendes Lade-/Ausgabe-Schubfach auswechselbar integriert, über das mittels der Transporteinrichtung entweder ein Plattenhalter mit einer Platte zu einem der Laufwerke oder zu einem freien Aufnahmefach in einem der Plattenmagazine befördert oder eine in einem Plattenmagazin vorhandene Platte gegen eine andere Platte ausgetauscht werden kann. Demnach kann eine nicht in einem Plattenmagazin vorhandene Platte für sich abgespielt oder bespielt und gegebenenfalls anschließend in einem Plattenmagazin abgelegt werden. Ebenso kann mittels des Lade-Schubfaches eine in dem Plattenmagazin vorhandene Platte gegen eine andere Platte ausgetauscht werden.

Weiterhin ist bevorzugt vorgesehen, daß dem Lade-/Ausgabe--Schubfach in der vorderen Tür des Gehäuses ein Ein-/Ausgabeschacht für einen Plattenhalter mit einer Platte zugeordnet ist, wobei der Plattenhalter bei ausgefahrenem Lade-/Ausgabe-Schubfach gegebenenfalls zwangsweise im Lade-/Ausgabe-Schubfach verbleibt. So ergibt sich eine einfache Handhabung des Lade-/Ausgabe-Schubfaches ohne Öffnung einer Tür des Gehäuses. Bei ausgefahrenem Lade-/Ausgabe-Schubfach kann der Plattenhalter entweder im Lade-/Ausgabe-Schubfach zwangsweise verbleiben, damit nur eine Platte geladen oder entnommen werden kann, oder die Platte wird mit dem zugehörigen Plattenhalter entnommen oder geladen. Ferner ermöglicht das Lade-/Ausgabe-Schubfach mit dem zugehörigen Ein-/Ausgabeschacht in Verbindung mit einer Geldverarbeitungseinrichtung einen Verkauf von bespielten Platten und/-oder das Bespielen leerer Platten gegen Entgeld.

Zwecks Erzielung einer leichten Bedienbarkeit des Wiedergabe- und/oder Aufzeichnungsgerätes weist nach einer vorteilhaften Weiterbildung der Erfindung die vordere Tür des Gehäuses ein Bedienungsfeld mit einer Eingabetastatur und mit einer Anzeige auf. ZweckmäBigerweise besteht die Anzeige des Bedienungsfeldes aus einem Bildschirm, auf dem die auf den Platten angebotenen Informationen anzeigbar und auf dem eine Bedienerführung, eine Kategorienauswahl und eine Kodenummernauswahl darstellbar sind. Damit ist die Zugänglichkeit zu den einzelnen Informationen wesentlich verbessert.

Um auch eine Fern-Bedienung des Wiedergabe- und/oder Aufzeichnungsgerätes zu ermöglichen, ist nach einer weiteren Ausgestaltung der Erfindung die rechnergesteuerte Steuereinheit desselben über eine Datenfernübertragungsvorrichtung mit einer zentralen Datenverarbeitungsanlage verbunden. Bevorzugt kann auch das Wiedergabe- und/oder Aufzeichnungsgerät auch selbst die zentrale Datenverarbeitungsanlage beinhalten, wobei es On-line mit verschiedenen Endgeräten verbunden ist. Bei einer Musikwiedergabe sind die Endgeräte mit Münzanlage, Bedienungspaneel, Lautsprechersystem sowie einer eigenen PC-gesteuerten Vorrichtung versehen, die den Zugriff zum Wiedergabe- und/oder Aufzeichnungsgerät ermöglicht. Bei Benutzer-Anwendungen (Dateien, Bibliotheksverwaltungen können die Endgeräte jeweils als Personalcomputer ausgeführt sein. Damit ist von allen Endgeräten der gleichzeitige Zugriff entsprechend der Anzahl der im Wiedergabe- und/oder Aufzeichnungsgerät vorhandenen Laufwerke auf das Wiedergabe- und/oder Aufzeichnungsgerät gewährleistet. Die Laufwerke können als CD-Audio-Laufwerk für die Musikwiedergabe, als CD-ROM-Laufwerk für die Datenabfragung, als CD-Recordable für die Datenaufnahme oder Musikaufnahme und/oder CD-Photo-Laufwerk für die Bildübertragung ausgebildet sein.

Es versteht sich, daB die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

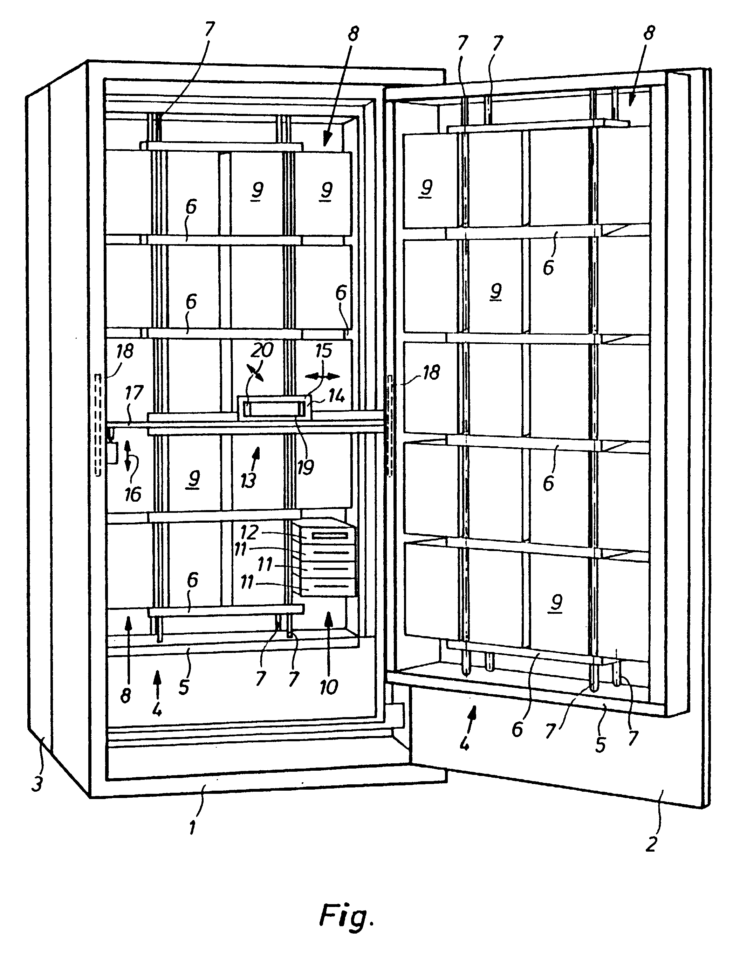

Der der Erfindung zugrundeliegende Gedanke wird in der nachfolgenden Beschreibung anhand eines Ausführungsbeispieles, das in der Zeichnung dargestellt ist, näher erläutert. Die einzige Figur der Zeichnung zeigt in perspektivischer Ansicht ein geöffnetes Wiedergabe- und/oder Aufzeichnungsgerät nach der Erfindung.

Das Wiedergabe- und/oder Aufzeichnungsgerät, durch das sowohl auf Platten, insbesondere CD-Platten, gespeicherte Informationen, insbesondere Musikdarbietungen ausgelesen und wiedergegeben als auch Informationen auf Platten eingeschrieben werden können, besitzt ein schrankartiges Gehäuse 1, an dem seitlich gegenüberliegend eine vordere Tür 2 und eine hintere Tür 3 angelenkt ist. Jede Tür 2,3 trägt auf ihrer Innenseite eine Fachanordnung 4, die aus einem rechteckförmigen Rahmen 5 mit darin eingesetzten Querträgern 6 sowie Vertikalträgern 7 besteht. Jede Fachanordnung 4 weist fünf übereinanderliegende Reihen aus vier nebeneinanderliegenden Fächern 8 auf. Bis auf ein Fach 8 der Fachanordnung 4 der hinteren Tür 3 sind sämtliche Fächer 8 mit Plattenmagazinen 9 bestückt. Jedes auswechselbar in ein Fach 8 eingesetztes Plattenmagazin 9 nimmt eine Vielzahl in übereinanderliegenden Aufnahmefächern gelagerter Plattenhalter mit einer Platte auf.

In einem nicht mit einem Plattenmagazin 9 bestückten Fach 8 der Fachanordnung 4 der hinteren Tür 3 befinden sich drei zu einem Turm 10 zusammengefaßte, übereinander angeordnete Laufwerke 11 zum Auslesen oder Einschreibung von Informationen auf eine bzw. von einer Platte. Jedes Laufwerk 11 ist in nicht dargestellten Führungen schubladenförmig gelagert und damit auswechselbar. In den Turm 10 der Laufwerke 11 ist ein einen Plattenhalter mit einer Platte aufnehmendes Lade-/Ausgabe-Schubfach 12 integriert. In dem freien Raum zwischen den gegenüberliegenden Fachanordnungen 4 befindet sich eine an eine nicht dargestellte rechnergesteuerte Steuereinheit angeschlossene Transporteinrichtung 13 zur wahlweisen Beförderung der einzelnen Platte mit dem Plattenhalter zwischen beliebigen Aufnahmefächern der Plattenmagazine 9, einem der Laufwerke 11 und dem Lade-/Ausgabe--Schubfach 12. Die Transporteinrichtung 13 weist einen Plattenhalter-Transportschlitten 14 auf, der zugleich in der horizontalen Richtung (sh. Pfeil 15) und der vertikalen Richtung (sh. Pfeil 16) verfahrbar ist. Hierzu ist der Plattenhalter-Transportschlitten 14 zwischen den beiden Fachanordnungen 4 längs einer horizontalen Führung motorgetrieben hin- und herbewegbar und gemeinsam mit der horizontalen Führung 17 auf gehäuseseitigen vertikalen Führungen 18 motorgetrieben auf- und abbewegbar. Eine Zug-Schub-Einrichtung 19 mit Greiferarmen ist am Plattenhalter-Transportschlitten zum Transport eines Plattenhalters mit einer Platte aus einem Aufnahmefach eines Plattenmagazins 9 bzw. einem Laufwerk 11 bzw. dem Lage-Ausgabe-Schubfach 12 in den Plattenhalter-Aufnahmeraum des Plattenhalter-Transportschlittens 14 und umgekehrt angebracht. Die Zug-Schub-Einrichtung 19 arbeitet also quer zu der horizontalen Bewegungsrichtung des Plattenhalter-Transportschlittens 14, was durch den Pfeil 20 angedeutet ist. Die gleichzeitige Bewegung des Plattenhalter-Transportschlittens 14 in der x-Richtung und in der y-Richtung gestattet einen schnellsmöglichen Zugriff zu einer gewünschten Platte. Über das Lade-/Ausgabe-Schubfach kann im Zusammenwirken mit der Transporteinrichtung 13 eine einzelne Platte aus einem Plattenmagazin 9 herausgenommen oder in diesem abgelegt werden, ohne daß hierzu das entsprechende Plattenmagazin 9 aus der Fachanordnung 4 entfernt werden muß. Die Adressierung der Platte erfolgt hierbei über die rechnergesteuerte Steuereinheit.

Die vordere Tür 2 des Gehäuses 1 weist auf ihrer Vorderseite ein nicht dargestelltes Bedienungsfeld mit einer Eingabetastatur und mit einem Bildschirm auf. Auf dem Bildschirm sind die auf den Platten angebotenen Informationen anzeigbar. Darüber hinaus können auf dem Bildschirm eine Bedienerführung, eine Kategorien-Auswahl, zum Beispiel nur moderne Musikdarbietungen, oder eine Kodenummernauswahl dargestellt werden. Weiterhin kann in der vorderen Tür 2 des Gehäuses 1 ein Ein-/Ausgabeschacht für einen Plattenhalter mit einer Platte vorgesehen sein, der dem Lade-/Ausgabe-Schubfach 12 zugeordnet ist.

## Patentansprüche

1. Wiedergabe- und/oder Aufzeichnungsgerät für Platten, insbesondere CD-Platten, mit
- einem schrankartigen Gehäuse (1),
- einer Fachanordnung (4) für Plattenmagazine (9), die in übereinanderliegenden Aufnahmefächern Plattenhalter für mindestens eine Platte aufnehmen, und mehreren Laufwerke (11) zum Auslesen oder Einschreiben von Informationen von der bzw. auf die Platte und
- einer rechnergesteuerten Transporteinrichtung (13) zur wahlweisen Beförderung der einzelnen Platte mit dem Plattenhalter zwischen beliebigen Aufnahmefächern und einem der Laufwerke (11),
gekennzeichnet durch
- eine der Fachanordnung (4) gegenüberliegende weitere Fachanordnung (4), in die jeweils die Plattenmagazine (9) und/oder die Laufwerke (11) auswechelbar eingesetzt sind,,
- mindestens eine am Gehäuse (1) angelenkte Tür (2 bzw. 3) die auf ihrer Innenseite die zugeordnete Fachanordnung (4) trägt,
- einen Plattenhalter-Transportschlitten (14), der auf zwischen den Fachanordnungen (4) angeordneten Führungen (17, 18) zugleich in der horizontalen und vertikalen Richtung verfahrbar ist, und
- eine Zug-Schub-Einrichtung (19) mit Greiferarmen am Plattenhalter-Transportschlitten (14) zur wechselseitigen Beförderung eines Plattenhalters zwischen einem Aufnahmefach bzw. einem Laufwerk (11) und dem Plattenhalter-Transportschlitten (14).

2. Wiedergabe- und/oder Aufzeichnungsgerät nach Anspruch 1, dadurch gekennzeichnet, daß die Laufwerke (11) jeweils als Einschubeinheit schubladenförmig übereinander in ein Fach (8) einer der Fachanordnungen (4) eingesetzt sind.

3. Wiedergabe- und/oder Aufzeichnungsgerät nach Anspruch 1 oder 2, dadurch gekennzeichnet, daß in einen aus den übereinander angeordneten Laufwerken (11) bestehenden Turm (10) mindestens ein einen Plattenhalter mit einer Platte aufnehmendes Lade-/Ausgabe-Schubfach (12) auswechselbar integriert ist, über das mittels der Transporteinrichtung (13) entweder ein Plattenhalter mit einer Platte zu einem der Laufwerke (11) oder zu einem freien Aufnahmefach in einem der Plattenmagazine (9) befördert oder eine in einem Plattenmagazin (9)vorhandene Platte gegen eine andere Platte ausgetauscht werden kann.

4. Wiedergabe- und/oder Aufzeichnungsgerät nach Anspruch 1, dadurch gekennzeichnet, daß dem Lade-/Ausgabe-Schubfach (12) in einer vorderen Tür (2) des Gehäuses (1) ein Ein/Ausgabeschacht für einen Plattenhalter mit einer Platte zugeordnet ist, wobei der Plattenhalter bei ausgefahrenem Lade-/Ausgabe-Schubfach (12) gegebenenfalls zwangsweise im Lade-/Ausgabe-Schubfach (12) verbleibt.

5. Wiedergabe- und/oder Aufzeichnungsgerät nach einem der Ansprüche 1 bis 4, dadurch gekennzeichnet, daß die vordere Tür (2) des Gehäuses (1) ein Bedienungsfeld mit einer Eingabetastatur und mit einer Anzeige aufweist.

6. Wiedergabe- und/oder Aufzeichnungsgerät nach Anspruche 5, dadurch gekennzeichnet, daß die Anzeige des Bedienungsfeldes aus einem Bildschirm besteht, auf dem auf den Platten angebotene Informationen anzeigbar und auf dem eine Bedienerführung, eine Kategorien-Auswahl und eine Kodenummernauswahl darstellbar sind.

7. Wiedergabe- und/oder Aufzeichnungsgerät nach einem der Ansprüche 1 bis 6, dadurch gekennzeichnet, daß die rechnergesteuerte Steuereinheit desselben über eine Datenfernübertragungseinrichtung mit einer zentralen Datenverarbeitungsanlage verbunden ist.

8. Wiedergabe- und/oder Aufzeichnungsgerät nach einem der Ansprüche 1 bis 7, dadurch gekennzeichnet, daß es eine zentrale Datenverarbeitungsanlage umfaßt.

9. Wiedergabe- und/oder Aufzeichnungsgerät nach Anspruch 8, dadurch gekennzeichnet, daß die zentrale Datenverarbeitungsanlage mit Endgeräten verbunden ist.

10. Wiedergabe- und/oder Aufzeichnungsgerät nach Anspruch 9, dadurch gekennzeichnet, daß die Endgeräte vernetzte Musikwiedergabegeräte sind.

11. Wiedergabe- und/oder Aufzeichnungsgerät nach Anspruch 9, dadurch gekennzeichnet, daß die Endgeräte vernetzte PC-Terminals mit Monitor sind.

12. Wiedergabe- und/oder Aufzeichnungsgerät nach einem der Ansprüche 7 bis 11, dadurch gekennzeichnet, daß eine gleichzeitige Zugriffsmöglichkeit für mehrere Benutzer vorgesehen ist.

13. Wiedergabe- und/oder Aufzeichnungsgerät nach einem der Ansprüche 7 bis 12, dadurch gekennzeichnet, daß eine On-line-Datenfernverarbeitung vorgesehen ist.

14. Wiedergabe- und/oder Aufzeichnungsgerät nach einem der Ansprüche 1 bis 13, dadurch gekennzeichnet, daß die Laufwerke (11) als CD-Audio, CD-ROM, CD-Redordable und/oder CD-Photo-Laufwerk ausgebildet sind.

## Claims

1. Playback and/or recording apparatus for discs, more especially compact discs, having
- a cabinet-like housing (1),
- a compartment arrangement (4) for disc magazines (9), which accommodate disc holders for at least one disc in accommodation compartments situated above one another, and a plurality of drive assemblies (11) for reading data from the disc or writing data onto the disc, and
- a computer-controlled conveyor (13) for selectively conveying the individual disc with the disc holder between optional accommodation compartments and one of the drive assemblies (11),
characterised by
- an additional compartment arrangement (4), which is situated opposite the compartment arrangement (4), and into which the disc magazines (9) and/or the drive assemblies (11) are respectively interchangeably inserted,
- at least one door (2 or 3 respectively), which is, pivotally mounted on the housing (1), carries the associated compartment arrangement (4) on its inside,
- a disc holder conveyor slide (14), which is displaceable both in the horizontal direction and in the vertical direction on guides (17, 18) disposed between the compartment arrangements (4), and
- a push-pull device (19), having gripper arms on the disc holder conveyor slide (14) for the alternate conveyance of a disc holder between an accommodation compartment or respectively a drive assembly (11) and the disc holder conveyor slide (14).

2. Playback and/or recording apparatus according to claim 1, characterised in that the drive assemblies (11) are respectively inserted into a compartment (8) of one of the compartment arrangements (4) in a drawer-like manner above one another as a slide-in unit.

3. Playback and/or recording apparatus according to claim 1 or 2, characterised in that at least one loading/unloading sliding compartment (12), which accommodates a disc holder with a disc, is interchangeably incorporated in a tower (10), which comprises the drive assemblies (11) disposed above one another, via which sliding compartment either a disc holder with a disc can be conveyed by means of the conveyor (13) to one of the drive assemblies (11) or to a free accommodation compartment in one of the disc magazines (9), or a disc, which is present in a disc magazine (9), can be exchanged for a different disc.

4. Playback and/or recording apparatus according to claim 1, characterised in that an input/output chute for a disc holder with a disc is associated with the loading/unloading sliding compartment (12) in a front door (2) of the housing (1), the disc holder possibly remaining necessarily in the loading/unloading sliding compartment (12) when the loading/unloading sliding compartment (12) has been moved-out.

5. Playback and/or recording apparatus according to one of claims 1 to 4, characterised in that the front door (2) of the housing (1) has a control panel provided with an input keyboard and a display.

6. Playback and/or recording apparatus according to claim 5, characterised in that the display of the control panel comprises a screen, on which data, available on the discs, can be displayed, and on which an operator guide, a selection of categories and a selection of code numbers can be shown.

7. Playback and/or recording apparatus according to one of claims 1 to 6, characterised in that the computer-controlled control unit of same is connected to a central data processing system via a remote data transmitting arrangement.

8. Playback and/or recording apparatus according to one of claims 1 to 7, characterised in that it includes a central data processing system.

9. Playback and/or recording apparatus according to claim 8, characterised in that the central data processing system is connected to terminal devices.

10. Playback and/or recording apparatus according to claim 9, characterised in that the terminal devices are interconnected music playback devices.

11. Playback and/or recording apparatus according to claim 9, characterised in that the terminal devices are interconnected PC terminals with a monitor.

12. Playback and/or recording apparatus according to one of claims 7 to 11, characterised in that a simultaneous access facility for a plurality of users is provided.

13. Playback and/or recording apparatus according to one of claims 7 to 12, characterised in that an on-line remote data processing unit is provided.

14. Playback and/or recording apparatus according to one of claims 1 to 13, characterised in that the drive assemblies (11) are configured as a CD audio, CD ROM, CD recordable and/or CD photo drive assembly.

## Revendications

1. Appareil de lecture et/ou d'enregistrement de disques en particulier de disques compacts, comportant
- un bâti (1) du type armoire,
- un dispositif à casiers (4) pour des magasins à disques (9), qui logent, dans des casiers de réception superposés, des supports de disque pour au moins un disque, et plusieurs mécanismes (11) pour la lecture ou l'enregistrement d'informations du disque ou sur le disque et
- un dispositif de transport (13) commandé par ordinateur pour transporter sélectivement le disque individuel avec le porte-disque entre des casiers de réception quelconques et l'un des mécanismes (11),
caractérisé par
- un autre dispositif à casiers (4), faisant face au dispositif à casiers (4), dans lequel les magasins à disques (9) et/ou les mécanismes (11) sont insérés chacun de manière interchangeable,
- au moins une porte (2 ou 3) articulée sur le bâti (1), qui porte sur son côté intérieur le dispositif à casiers (4) correspondant,
- un chariot de transport de support de disque (14), qui est déplaçable sur des organes de guidage (17, 18), placés entre les dispositifs à casiers (4), en même temps dans le sens horizontal et le sens vertical, et
- un dispositif à traction et poussée (19) avec bras de préhension sur le chariot de transport de support de disque (14), pour le transport réciproque d'un support de disque entre un casier de réception ou un mécanisme (11) et le chariot de transport de support de disque (14).

2. Appareil de lecture et/ou d'enregistrement selon la revendication 1, caractérisé en ce que les mécanismes (11) sont montés chacun en tant qu'unités embrochables, superposées en forme de tiroir, dans un casier (8) de l'un des dispositifs à casiers (4).

3. Appareil de lecture et/ou d'enregistrement selon la revendication 1 ou 2, caractérisé en ce que dans une tour (10), constituée des mécanismes (11) superposés, est intégré de manière interchangeable au moins un tiroir de chargement/déchargement (12), recevant un support de disque avec un disque, par lequel, au moyen du dispositif de transport (13), soit un support de disque avec un disque peut être transporté vers l'un des mécanismes (11) ou vers un casier de réception libre dans l'un des magasins à disques (9), soit un disque se trouvant dans un magasin à disques (9) peut être échangé contre un autre disque.

4. Appareil de lecture et/ou d'enregistrement selon la revendication 1, caractérisé en ce qu'au tiroir de chargement/déchargement (12) est associé, dans une porte (2) avant du bâti (1), un compartiment d'introduction/extraction d'un support de disque avec un disque, le support de disque restant éventuellement forcément dans le tiroir de chargement/déchargement (12), lorsque le tiroir de chargement/déchargement (12) est extrait.

5. Appareil de lecture et/ou d'enregistrement selon l'une des revendications 1 à 4, caractérisé en ce que la porte (2) avant du bâti (1) présente une zone de commande avec un clavier d'introduction et avec un afficheur.

6. Appareil de lecture et/ou d'enregistrement selon la revendication 5, caractérisé en ce que l'afficheur de la zone de commande est constitué d'un écran, sur lequel peuvent être affichées des informations proposées par les disques et sur lequel peuvent être représentées une aide à l'opérateur, une sélection de catégories et une sélection de numéros de code.

7. Appareil de lecture et/ou d'enregistrement selon l'une des revendications 1 à 6, caractérisé en ce que l'unité de commande de celui-ci, commandée par ordinateur, est reliée à une installation centrale de traitement de données, par un dispositif de transmission de données.

8. Appareil de lecture et/ou d'enregistrement selon l'une des revendications 1 à 7, caractérisé en ce qu'il comprend une installation centrale de traitement de données.

9. Appareil de lecture et/ou d'enregistrement selon la revendication 8, caractérisé en ce que l'installation centrale de traitement de données est reliée à des terminaux.

10. Appareil de lecture et/ou d'enregistrement selon la revendication 9, caractérisé en ce que les terminaux sont des appareils de lecture de musique en réseau.

11. Appareil de lecture et/ou d'enregistrement selon la revendication 9, caractérisé en ce que les terminaux sont des terminaux PC en réseau avec moniteur.

12. Appareil de lecture et/ou d'enregistrement selon l'une des revendications 7 à 11, caractérisé en ce qu'il est prévu une possibilité d'accès simultané pour plusieurs utilisateurs.

13. Appareil de lecture et/ou d'enregistrement selon l'une des revendications 7 à 12, caractérisé en ce qu'il est prévu un traitement en ligne des données.

14. Appareil de lecture et/ou d'enregistrement selon l'une des revendications 1 à 13, caractérisé en ce que les mécanismes (11) sont des CD audio, des CD ROM, des CD pouvant enregistrer et/ou un mécanisme pour CD photo.
